# EUROPEAN PATENT APPLICATION

(11) **EP 4 165 998 A1**
(43) Date of publication of application: **19.04.2023**
(21) Application number: 22199887.5
(22) Date of filing: 05.10.2022
(51) Int. Cl.: A23C 1/04, A23C 1/12, A23C 9/142, A23C 21/06, A23J 1/20

(54) **A METHOD OF PRODUCING A DRY COMPOSITION COMPRISING A HIGH AMOUNT OF LACTOSE OBTAINED FROM A LACTOSE PERMEATE AND IN ADDITION CASEIN, COMPOSITION OBTAINED THEREFROM AND PRODUCT COMPRISING THE COMPOSITION**

(30) Priority: 12.10.2021 PL 43918921
(71) Applicant: Okregowa Spoldzielnia Mleczarska w Piatnicy, 18-421 Piatnica (PL)
(72) Inventor: Kalinowski, Zbigniew, 18-400 Stara om a przy Szosie (PL)
(74) Representative: Godlewski, Piotr

(57) **Abstract**

The present invention relates to a method for producing a powdered high protein lactose permeate, a powdered high protein lactose permeate obtained by this method and a product containing high protein lactose permeate. The method involves concentration of lactose permeate, lactose crystallisation and drying in the presence of casein.

## Description

The present invention relates to a method for producing a high protein lactose permeate, a high protein lactose permeate obtained by this method and a product containing high protein lactose permeate.

The manufacturing process of curd cheese and cottage cheese is associated with the production of huge amounts of acid whey. This liquid, called a by-product, contains valuable nutrients such as: casein proteins, whey proteins, lactose, minerals and vitamins. Casein is the largest molecule among these ingredients and is called casein dust. It must be separated from whey (by means of a centrifuge) prior to the concentration process by membrane methods as it may clog the pores of the membrane. Casein dusts are obtained in two ways: directly from whey, as well as from the water in the process of washing the grains of cottage cheese. Both whey with casein dust and water with casein dust are collected in tanks, where they are stored until the centrifugation process. The centrifugation process in centrifuges allows for the separation of casein dust from whey and water.

Currently, half of the casein dust from whey is used as an ingredient - a structure-forming protein in dairy products. The remaining amount of dust, especially dust from water, is either processed into animal feed or disposed of.

Documents disclosing methods of obtaining modified whey powder and modified acid whey are known in the art. Document PL382188 discloses a method of treating whey as an intermediate for further processing based on its neutralisation. The product obtained in this way is a feed for farm animals and is an intermediate for further processing, it can be used for the production of condensed milk, powdered milk, cakes, supplements, butter, ice cream, sweets, chocolate, as well as in the pharmaceutical and cosmetic and industries, and household chemicals.

Patent EP1958514 discloses a process for producing modified whey powder with a lactose content of 80 to 95%, a protein content of 0.5 to 2% and an ash content of 0.5 to 2% from whey permeate or mixtures thereof, consisting of the following steps:
a) providing whey permeate by ultrafiltration or nanofiltration from the curd and optionally pasteurisation,
b) demineralisation of the whey permeate in the ion exchange process, characterised by passing the whey permeate through a cation-exchange and anion-exchange resin,
c) crystallisation of at least partial lactose contained in the whey permeate,
d) spray drying the whey permeate.
The modified whey powder obtained in this way is suitable for dry use in the production of foodstuffs. Moreover, the present invention relates to modified whey powder (MWP) possible to obtain by this method and products containing said modified whey powder (MWP), such as confectionery, biscuits and soft drink powders.

Publication US2015150275 discloses methods for processing acid whey, comprising treating an acid whey solution with α-galactosidase and/or β-galactosidase at a pH of approximately 3.2 to approximately 5.2 to produce an acid whey solution containing at least approximately 40% less lactose than the primary acid whey solution, filtering the acid whey solution to form a retentate containing proteins and a permeate containing lactose and residual proteins, recovering lactose from the permeate, optionally drying the retentate to form an acid whey powder, and optionally texturing the acid whey powder.

A patent document (application number P 435 563) discloses a method for producing acid whey powder, an acid whey powder obtained in this way and a feed product containing acid whey powder.

In the prior art methods for obtaining whey modified according to pH or lactose and particular protein content are known. However, there is a continuous need to obtain an improved product with unprecedented characteristics and to obtain an ecological product with the use of waste materials generated during the production of dairy products.

Accordingly, the object of the invention is to produce a powdered lactose permeate, which will be enriched in proteins with the use of casein dust, allowing for the production of an innovative product - lactose permeate with a high protein content.

Currently, powdered lactose permeates are mainly used for the production of animal feed. A product with a higher protein content will increase the nutritional and energy value of these feeds. A higher protein content will also facilitate the process of balancing the nutritional value of such feeds.

The subject of the invention is a method of producing a powdered lactose permeate comprising the steps of storage, pre-concentration by means of membrane nanofiltration, subsequent concentration in an evaporator to 54-58% dry weight, lactose crystallisation and drying, characterised in that the method comprises the step of adding liquid casein protein dust to the pre-concentrated and evaporator-concentrated lactose permeate concentrate before the lactose crystallisation process or after the lactose crystallisation process.

Preferably, the raw material for producing the high protein lactose permeate is a standard lactose permeate concentrate concentrated by nanofiltration.

Preferably, lactose permeate concentrate concentrated by nanofiltration contains from 0.3 to 0.6% vol. proteins.

Preferably, the liquid casein protein dust is derived from whey or rinse water.

Preferably, the casein dust comprises from 4 to 20% vol. proteins, 75-95% vol. water, 0.05-1.5 vol.% fat and up to 3% vol. lactose.

Preferably, the casein dust derived from whey comprises from 12% vol. proteins, 83% vol. water, approximately 0.9% vol. fat and up to 2.4% vol. lactose.

Preferably, the casein dust derived from rinse water comprises 6% vol. proteins, 93% vol. water, approximately 0.1% vol. fat and less than 0.1% vol. lactose.

Preferably, the liquid casein dust constitutes 15-40% vol. of the entire mixture.

Preferably, the liquid casein protein dust is fed on-line.

Preferably, the drying parameters are as follows: tower feed approx. 2000-2500 kg/h, inlet temperature 165-170°C, outlet temperature 85-98°C.

Another object of the invention is a high protein lactose permeate powder obtained by the method described above.

Preferably, the permeate has the following parameters: water content 1.5-4 % vol., protein content 7-8 % vol., fat content 0.6-1.25 % vol., lactose content 70-80 % vol. and ash 7-8 % vol., the raw material being a standard lactose permeate concentrate concentrated with the use of nanofiltration.

Yet another object of the invention is an animal feed product containing a high protein lactose permeate powder as described above.

The technical problem solved by the invention is the development of a method for the production of an innovative powdered lactose permeate with a modified (high) protein content, thanks to the innovative method of adding casein dusts.

The advantage of the developed method is that highly nutritious casein dusts were used. In addition, the lactose permeate obtained in this way with strictly defined parameters will facilitate the normalisation of the nutritional value or will enrich the energy content of feed for animals to which it will be added.

The subject of the invention is illustrated in the following non-limiting examples.

During the production of curd cheese and grain for cottage cheese, sprayed casein proteins are formed in the processes of cutting, and mechanical and thermal processing of the curd, and subsequently, together with the whey, are sent to storage tanks. The casein proteins are then separated from the whey using a centrifuge. In this way, casein dust and standard acid whey are obtained separately for further processing.

Casein dusts derived from water are produced in the process of washing the grains of cottage cheese and are also separated from the water by means of a centrifuge.

The casein dust comprises from 4 to 20% vol. proteins, 75-95% vol. water, 0.05-1.5 vol.% fat and up to 3% vol. lactose.

Casein dust derived from whey contains ~12.5% protein, ~83% water, ~0.9% fat, ~2.4% lactose. Casein dust derived from rinse water contains ~6% protein, ~93% water, ~0.1% fat, less than ~0.1% lactose.

Whey contains ~0.7% protein, ~94% water, ~0.3% fat, ~4.0% lactose.

Standard whey, after dust separation, is most often subjected to the nanofiltration process in order to concentrate it to the pH parameters of 4.4-4.6; dry weight 17-18.5%; fat 0.06-0.18%; protein 1.6-2% before the concentration process on the evaporator.

It is also possible to use the ultrafiltration process for standard whey in order to recover valuable whey proteins. Whey free of whey proteins is called lactose permeate and is subjected to the nanofiltration process in order to pre-concentrate to the parameters of pH 4.4-4.6; dry weight 17.4%; fat 0.01%; protein 0.30- 0.65%. The pre-concentrated lactose permeate concentrate is subjected to another concentration process on the evaporator.

### Example 1

### Standard technology for the production of powdered lactose permeate

The raw material is a lactose permeate concentrate (pH 4.4-4.6; dry weight 17-18.5%; fat 0.06-0.18%; protein 0.3-0.6%) concentrated by nanofiltration.

The lactose permeate concentrate is stored for a maximum of 24 hours at a temperature of up to 10°C and fed to an evaporator for concentration to a dry weight of 55-57%. Subsequently, the concentrate is directed to a crystalliser. Initial cooling to 30°C is fast (Δt between the refrigerant and the concentrate is 30°C). Subsequently, the phase of slow crystallisation is conducted down to 18°C with the setting Δt=5°C. After approximately 12 hours of crystallisation, the concentrate is directed to a drying tower.

### Drying parameters:

- tower feed approx. 2500kg/h
- inlet temperature 165-170°C
- outlet temperature 85-98°C

### Parameters of the powder obtained after drying lactose permeate:

- water content 1.5-4%
- protein content 2-4%
- fat content 0.6-1.25%
- lactose content 75-90%
- ash 7-8%

### Example 2

### Technology of production of powdered lactose permeate with the stage of adding casein protein dust

The raw material for the production of powdered lactose permeate is:
- a lactose standard permeate concentrate (pH 4.4-4.6; dry weight 17-18.5%; fat 0.06-0.18%; protein 0.3-0.6%) concentrated by nanofiltration

The addition of liquid casein protein dust can be performed in one of two steps:
a) before the lactose crystallisation process in the whey concentrate
   The lactose standard permeate concentrate is stored for a maximum of 24 hours at a temperature of up to 10°C and fed to an evaporator for concentration to a dry weight of 55-57%. Subsequently, the concentrate is directed to a crystalliser, where liquid casein protein dust (dry mass 16-18%, protein 11-12%, fat 0.05-0.2%) in the amount of 15-40% of the whole mixture is fed on-line. Initial cooling to 30°C is fast (Δt between the refrigerant and the concentrate is 30°C). Subsequently, the phase of slow crystallisation is conducted down to 18°C with the setting Δt=5°C. The crystallisation process lasts approx. 12 h. Subsequently, the mixture is fed into a drying tower.
b) after the lactose crystallisation process in the whey concentrate.

The lactose standard permeate concentrate is stored for a maximum of 24 hours at a temperature of up to 10°C and fed to an evaporator for concentration to a dry weight of 55-57%. Subsequently, the concentrate is directed to a crystalliser. Initial cooling to 30°C is fast (Δt between the refrigerant and the concentrate is 30°C). Subsequently, the phase of slow crystallisation is conducted down to 18°C with the setting Δt=5°C. After approx. 12 hours of crystallization, liquid casein protein dust (dry mass 16-18%, protein 11-12%, fat 0.05-0.2%) in the amount of 15-40% of the whole mixture is fed on-line. The mixing process takes approx. 90 minutes. Subsequently, the mixture is fed into a drying tower.

Regardless of the stage of adding liquid casein dust, the parameters of the drying process remain unchanged.

### Drying parameters

- tower feed approx. 2000-2500kg/h
- inlet temperature 165-170°C
- outlet temperature 85-98°C
In the case of drying lactose permeate with the addition of casein dusts, an innovative product in the form of a high protein lactose permeate will be obtained.

### Parameters of high protein lactose permeate powder:

- water content 1.5-4%
- protein content 7-8%
- fat content 0.6-1.25%
- lactose content 70-80%
- ash 7-8%

## Claims

1. A method of producing a powdered lactose permeate comprising the steps of storage, pre-concentration by means of membrane nanofiltration, subsequent concentration in an evaporator to 54-58% dry weight, lactose crystallisation and drying, **characterised in that** the method comprises the step of adding liquid casein protein dust to the pre-concentrated and evaporator-concentrated lactose permeate concentrate before the lactose crystallisation process or after the lactose crystallisation process.

2. The method according to claim 1, **characterised in that** the raw material for producing the high protein lactose permeate is a standard lactose permeate concentrate concentrated by nanofiltration.

3. The method according to claim 2, **characterised in that** lactose permeate concentrate concentrated by nanofiltration contains from 0.3 to 0.6% vol. proteins.

4. The method according to any one of the preceding claims, **characterised in that** the liquid casein protein dust is derived from whey or rinse water.

5. The method according to any one of the preceding claims, **characterised in that** the casein dust comprises from 4 to 20% vol. proteins, 75-95% vol. water, 0.05-1.5 vol.% fat and up to 3% vol. lactose.

6. The method according to claim 4, **characterised in that** the casein dust derived from whey comprises from 12% vol. proteins, 83% vol. water, approximately 0.9% vol. fat and up to 2.4% vol. lactose.

7. The method according to claim 4, **characterised in that** the casein dust derived from rinse water comprises 6% vol. proteins, 93% vol. water, approximately 0.1% vol. fat and less than 0.1% vol. lactose.

8. The method according to any one of the preceding claims, **characterised in that** the liquid casein dust constitutes 15-40% vol. of the entire mixture.

9. The method according to any one of the preceding claims, **characterised in that** the liquid casein protein dust is fed on-line.

10. The method according to any one of the preceding claims, **characterised in that** the drying parameters are as follows: tower feed approx. 2000-2500 kg/h, inlet temperature 165-170°C, outlet temperature 85-98°C.

11. A high protein lactose permeate powder obtained by the method of claims 1 to 10.

12. A high protein lactose permeate according to claim 11 **characterised in that** the permeate has the following parameters: water content 1.5-4 % vol., protein content 7-8 % vol., fat content 0.6-1.25 % vol., lactose content 70-80 % vol. and ash 7-8 % vol., the raw material being a standard lactose permeate concentrate concentrated with the use of nanofiltration.

13. An animal feed product containing high protein lactose permeate powder as defined in claims 11 to 12.
